# EUROPÄISCHE PATENTSCHRIFT

(11) **EP 3 819 484 B1**
(45) Veröffentlichungstag und Bekanntmachung des Hinweises auf die Patenterteilung: **25.01.2023**
(21) Anmeldenummer: 20199180.9
(22) Anmeldetag: 30.09.2020
(51) Int. Cl.: F01N 3/20, F01N 13/18

(54) **ABGASANLAGE FÜR EINE BRENNKRAFTMASCHINE UND VERFAHREN ZUR HERSTELLUNG EINER ABGASANLAGE**
EXHAUST GAS SYSTEM FOR AN INTERNAL COMBUSTION ENGINE AND METHOD OF MANUFACTURING OF AN EXHAUST GAS SYSTEM
SYSTÈME DES GAZ D'ÉCHAPPEMENT D'UN MOTEUR À COMBUSTION INTERNE ET PROCÉDÉ DE FABRICATION D'UN SYSTÈME DES GAZ D'ÉCHAPPEMENT

(30) Priorität: 05.11.2019 DE 102019129795
(43) Veröffentlichungstag der Anmeldung: 12.05.2021
(73) Patentinhaber: Purem GmbH, 66539 Neunkirchen (DE)
(72) Erfinder: Uysal, Fatih, 73207 Plochingen (DE); Kurpejovic, Enver, 73230 Kirchheim unter Teck (DE); Uebele, Dietmar, 73779 Deizisau (DE)
(74) Vertreter: Ruttensperger Lachnit Trossin Gomoll

(56) Entgegenhaltungen:
- EP-A1- 0 848 785
- EP-B1- 0 848 785
- DE-T2- 69 533 609
- US-A1- 2017 016 370

## Beschreibung

Die vorliegende Erfindung betrifft eine Abgasanlage für eine Brennkraftmaschine sowie ein Verfahren zur Herstellung einer derartigen Abgasanlage.

Zum Verringern des Stickoxidanteils in den von einer Brennkraftmaschine zur Umgebung ausgestoßenen Abgasen ist es bekannt, in den Abgasstrom ein Reaktionsmittel, wie zum Beispiel eine Harnstoff/Wasser-Lösung, einzuspritzen und in einer SCR-Katalysatoranordnung eine den Stickoxidanteil verringernde katalytische Reaktion durchzuführen. Um eine gute Durchmischung des im Allgemeinen als Sprühnebel eingespritzten, flüssigen Reaktionsmittels mit dem Abgas zu erreichen, ist in Strömungsrichtung zwischen einem das Reaktionsmittel einspritzenden Injektor und der SCR-Katalysatoranordnung im Allgemeinen ein beispielsweise plattenartiger oder/und mit Flügeln ausgebildeter Mischer angeordnet, der einerseits eine Verwirbelung des Abgasstroms erzeugt und der andererseits eine durch den Abgasstrom erwärmte Oberfläche bereitstellt, an welcher das darauf auftreffende Reaktionsmittel abgedampft werden kann.

Eine Abgasanlage gemäß dem Oberbegriff des Anspruchs 1 ist aus der US 2017/0016370 A1 bekannt. Bei dieser bekannten Abgasanlage ist eine Durchführungsanordnung vorgesehen, mit welcher eine als Metallstift ausgebildete Kontaktbuchse durch eine Durchführungsöffnung in einer Außenwandung einer abgasführenden Komponente hindurchgeführt ist. In ihrem im Inneren des von der Außenwandlung umschlossenen Volumens der abgasführenden Komponente liegenden Endbereich ist die Kontaktbuchse an eine von einem Metallmantel umgebene Heizleiteranordnung eines Heizleiterelements angeschlossen.

Die DE695 33 609 T2 offenbart eine Durchführungsanordnung, mit welcher eine Elektrode durch eine Durchführungsöffnung in einem Metallgehäuse hindurchgeführt ist.

Die EP 0 848 785 A1 offenbart eine Durchführungsanordnung, mit welcher ein von einer Isolierung und einer Hülse umgebender Leiter durch eine Durchführungsöffnung hindurchgeführt ist. Die Hülse ist durch eine Schweißnaht an einen eine Außenwandlung bereitstellenden Mantel angebunden.

Es ist die Aufgabe der vorliegenden Erfindung, eine Abgasanlage für eine Brennkraftmaschine und ein Verfahren für deren Herstellung bereitzustellen, mit welchen, beispielsweise zur verstärkten Verdampfung eines in den Abgasstrom eingespritzten Reaktionsmittels, der Eintrag von Wärme zur Erwärmung von Systembereichen der Abgasanlage ermöglicht wird.

Erfindungsgemäß wird diese Aufgabe gelöst durch eine Abgasanlage für eine Brennkraftmaschine gemäß Anspruch 1. Diese umfasst:
- eine abgasführende Komponente mit einer Außenwandung,
- ein Heizleiterelement mit einem Mantel und einer von dem Mantel umgebenen Heizleiteranordnung,
- eine Durchführungsanordnung zum gasdichten Durchführen des Heizleiterelements durch die Außenwandung der abgasführenden Komponente,
wobei die Durchführungsanordnung eine von dem Heizleiterelement durchsetzte Durchführungsöffnung in der Außenwandung und ein mit dem Heizleiterelement einerseits und der Außenwandung andererseits gasdicht verbundenes Verbindungselement umfasst.

Mit der erfindungsgemäßen Ausgestaltung einer Abgasanlage wird einerseits gewährleistet, dass durch das Bereitstellen des Heizleiterelements und das elektrische Erregen desselben im Inneren der abgasführenden Komponente Wärme bereitgestellt werden kann, welche auf darin angeordneten Systembereiche, wie zum Beispiel einen Mischer, übertragen werden kann. Andererseits wird eine unmittelbare Verbindung des Heizleiterelements mit der Außenwandung der abgasführenden Komponente vermieden, was die Gefahr einer Beschädigung des Heizleiterelements bei der Herstellung einer derartigen Verbindung ausschließt und darüber hinaus das Positionieren des die Durchführungsöffnung durchsetzenden Heizleiterelements mit seinem im Inneren der abgasführenden Komponente liegenden Längenbereich in der dafür vorgesehenen Einbauposition erleichtert. Somit kann insbesondere in einer Startphase des Verbrennungsbetriebs in einer Brennkraftmaschine, in welcher die verschiedenen Systembereiche der Abgasanlage durch den Abgasstrom noch nicht ausreichend erwärmt sind, um die verschiedenen physikalischen Prozesse bzw. Reaktionen effizient durchzuführen, beispielsweise die Verdampfung des in den Abgasstrom eingespritzten Reaktionsmittels im Bereich eines Mischers unterstützt werden und somit auch in einer derartigen Phase eine selektive katalytische Reduktion bereits effizient durchgeführt werden. Der erfindungsgemäße Aufbau einer Abgasanlage kann auch im Zusammenhang mit anderen im Inneren der Abgasanlage liegenden und im Betrieb der Abgasanlage bzw. einer Brennkraftmaschine zu erwärmenden oder vorzuwärmenden Systembereichen einer Abgasanlage Anwendung finden.

Um die Gefahr einer Beschädigung des Heizleiterelements bei der Anbindung an die Außenwandung der abgasführenden Komponente weiter verringern zu können, umfasst die erfindungsgemäße Durchführungsanordnung in einem die Durchführungsöffnung durchsetzenden Längenabschnitt des Heizleiterelements eine Aufdickung des Mantels.

Bei einer baulich einfach zu realisierenden Ausgestaltung kann die Aufdickung durch eine den Mantel gasdicht umgebende Hülse bereitgestellt sein, wobei in besonders vorteilhafter Weise die Hülse mit dem Mantel durch Verpressen gasdicht verbunden ist, so dass eine materialschlüssige, beispielsweise durch Verschweißen erzeugte Verbindung zwischen der Hülse und dem Mantel vermieden wird. Die zum Erzeugen einer derartigen Verpressung erforderliche plastische Verformbarkeit der Hülse kann beispielsweise dadurch erreicht werden, dass die Hülse mit Metallmaterial aufgebaut ist.

Um das Einführen und Positionieren des Heizleiterelements in der für dieses vorgesehenen Einbauposition möglichst einfach gestalten zu können, kann eine Innenquerschnittsabmessung, vorzugsweise Innendurchmesser, der Durchführungsöffnung wenigstens das 1,5-Fache einer Außenquerschnittsabmessung, vorzugsweise Außendurchmesser, des Heizleiterelements in seinem die Durchführungsöffnung durchsetzenden Längenabschnitt betragen.

Der Austritt von Abgas aus der Abgasanlage im Bereich der Anbindung des Heizleiterelements wird zuverlässig dadurch unterbunden werden, dass das Verbindungselement mit der Außenwandung materialschlüssig, vorzugsweise durch Verschweißen, verbunden ist. Auch das Heizleiterelement kann mit dem Verbindungselement materialschlüssig, vorzugsweise durch Verschweißen, verbunden sein.

Zum Erreichen einer stabilen, gasdichten Anbindung an die Außenwandung der abgasführenden Komponente einerseits und das Heizleiterelement andererseits kann das Verbindungselement umfassen:
- einen eine Heizleiterelement-Aufnahmeöffnung bereitstellenden und in die Durchführungsöffnung in der Außenwandung eingreifenden Heizleiterelement-Verbindungsbereich,
- einen vom Heizleiterelement-Verbindungsbereich nach außen hervorstehenden und einen die Durchführungsöffnung in der Außenwandung umgebenden Randbereich der Außenwandung übergreifenden Außenwandung-Verbindungsbereich,
wobei der Heizleiterelement-Verbindungsbereich mit dem Heizleiterelement materialschlüssig, vorzugsweise durch Verschweißen, verbunden ist und der Außenwandung-Verbindungsbereich mit der Außenwandung materialschlüssig, vorzugsweise durch Verschweißen, verbunden ist.

Aus Stabilitätsgründen ist der Mantel mit Metallmaterial aufgebaut. Für eine thermische Verluste bei der Erregung des Heizleiterelements minimierende Ausgestaltung wird vorgeschlagen, dass die Heizleiteranordnung in einem die Durchführungsöffnung durchsetzenden Längenabschnitt des Heizleiterelements einen elektrischen Anschlussleiter und einen im Inneren der Abgasführungskomponente an den Anschlussleiter anschließenden Heizleiter umfasst. Hierfür ist es besonders vorteilhaft, wenn ein Übergang von dem Anschlussleiter zu dem Heizleiter im Bereich eines im Inneren der Abgasführungskomponente angeordneten Endes der Aufdickung liegt, vorzugsweise derart, dass der Übergang nicht von der Aufdickung umgeben ist.

Die eingangs angegebene Aufgabe wird weiter gelöst durch ein Verfahren zum Aufbau einer erfindungsgemäßen Abgasanlage, umfassend die Maßnahmen:
a) Bereitstellen der abgasführenden Komponente mit der Durchführungsöffnung in der Außenwandung,
b) Hindurchführen des Heizleiterelements durch die Durchführungsöffnung in der Außenwandung,
c) nach Durchführung der Maßnahme b), Anordnen des Verbindungselements an dem Heizleiterelement derart, dass das Verbindungselement im Bereich der Durchführungsöffnung an der Außenwandung positioniert ist,
d) nach Durchführung der Maßnahme c), gasdichtes Verbinden des Verbindungselements mit der Außenwandung und dem Heizleiterelement.

Die Maßnahme a) umfasst das Bereitstellen des Heizleiterelements mit der Aufdickung, und die Maßnahme b) umfasst das Hindurchführen des Heizleiterelements durch die Durchführungsöffnung in der Außenwand derart, dass das Heizleiterelement mit der Aufdickung durch die Durchführungsöffnung sich hindurcherstreckend positioniert ist.

Um das Heizleiterelement für die feste Anbindung an die Außenwandung geeignet positionieren zu können, wird vorgeschlagen, dass bei der Maßnahme c) das Verbindungselement derart an dem Heizleiterelement angeordnet wird, dass der Heizleiterelement-Verbindungsbereich das Heizleiterelement in der Heizleiterelement-Aufnahmeöffnung aufnehmend und in die Durchführungsöffnung eingreifend positioniert ist und dass der Außenwandung-Verbindungsbereich den Randbereich der Außenwandung übergreifend an der Außenwandung anliegend positioniert ist.

Die Maßnahme c) kann eine Maßnahme c1) zum gasdichten Verbinden des Verbindungselements mit der Außenwandung und nach der Maßnahme c1) eine Maßnahme c2) zum gasdichten Verbinden des Verbindungselements mit dem Heizleiterelement umfassen. Es wird bei dieser Abfolge also zunächst das Verbindungselement mit der abgasführenden Komponente fest verbunden, so dass grundsätzlich noch eine Feinjustierung des Heizleiterelements bezüglich des Verbindungselements möglich ist, wenn dieses bereits an der Außenwand festgelegt ist. Erst dann wird das Heizleiterelement an das Verbindungselement fest angebunden.

Beispielsweise kann bei der Maßnahme c) das Verbindungselement mit der Außenwandung durch Verschweißen verbunden werden oder/und mit dem Heizleiterelement durch Verschweißen verbunden werden.

Um das Positionieren des Heizleiterelements in der abgasführenden Komponente in der dafür vorgesehenen Einbauposition auch bei komplexerer Formgebung des Heizleiterelements einfach durchführen zu können, kann die Maßnahme a) das Bereitstellen der abgasführenden Komponente mit der Durchführungsöffnung derart umfassen, dass eine Innenquerschnittsabmessung, vorzugsweise Innendurchmesser, der Durchführungsöffnung wenigstens das 1,5-Fache einer Außenquerschnittsabmessung, vorzugsweise Außendurchmesser, des Heizleiterelements in seinem die Durchführungsöffnung durchsetzend zu positionierenden Längenabschnitt beträgt.

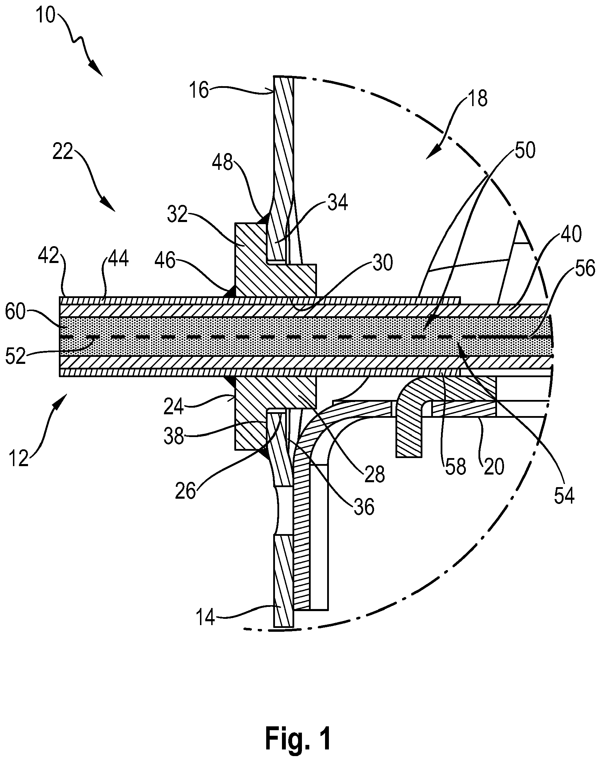

Die vorliegende Erfindung wird nachfolgend mit Bezug auf die beiliegende Fig. 1 detailliert beschrieben, welche eine Schnittdarstellung einer abgasführenden Komponente im Bereich der Durchführung eines Heizleiterelements durch eine Außenwandung der abgasführenden Komponente zeigt.

In Fig. 1 ist ein Abschnitt einer allgemein mit 10 bezeichneten Abgasanlage einer Brennkraftmaschine in einem Fahrzeug dargestellt, in welchem ein Heizleiterelement 12 durch eine Außenwandung 14 einer abgasführenden Komponente 16 hindurchgeführt ist. Die abgasführende Komponente 16 kann beispielsweise ein Abgasrohr oder ein stromaufwärts einer SCR-Katalysatoranordnung angeordnetes oder diese enthaltendes Gehäuse sein, dessen durch die Außenwandung bereitgestellte Rohrwandung bzw. Gehäusewandung ein von Abgas durchströmbares Volumen 18 umgrenzt. Im Inneren der abgasführenden Komponente 16 ist im dargestellten Beispiel ein beispielsweise als Blechumformteil ausgebildeter Mischer 20 angeordnet. Der Mischer 20 verwirbelt den Abgasstrom und unterstützt dabei die Durchmischung von Abgas und in dieses eingespritztem Reaktionsmittel und stellt eine Oberfläche bereit, an welcher das darauf auftreffende Reaktionsmittel verdampft werden kann. Diese Verdampfung kann insbesondere in einer Startphase des Verbrennungsbetriebs einer Brennkraftmaschine durch Erregung des Heizleiterelements 12 und damit Erwärmung des Mischers 20 unterstützt werden.

Eine allgemein mit 22 bezeichnete Durchführungsanordnung, welche ein gasdichtes Durchführen des Heizleiterelements 12 durch die Außenwandung 14 hindurch gewährleistet, umfasst ein im Querschnitt T-förmig ausgebildetes Verbindungselement 24 und eine in der Außenwandung 14 ausgebildete Durchführungsöffnung 26. Das Verbindungselement 24 weist einen in die Durchführungsöffnung eingreifend positionierten Heizleiterelement-Verbindungsbereich 28 auf. In dem Heizleiterelement-Verbindungsbereich 28 ist eine Heizleiterelement-Aufnahmeöffnung 30 ausgebildet, durch welche das Heizleiterelement 12 sich hindurch erstreckt. Das Verbindungselement 24 weist ferner einen bezüglich einer Längsmittenachse der Heizleiterelement-Aufnahmeöffnung vom Heizleiterelement-Verbindungsbereich 28 nach radial außen hervorstehenden Außenwandung-Verbindungsbereich 32 auf. Dieser übergreift einen die Durchführungsöffnung 26 in der Außenwandung 14 umgebenden Randbereich 34 der Außenwandung 14 an deren Außenseite. Beispielsweise kann bei im Allgemeinen runder Querschnittskontur der Außenwandung 14 die Durchführungsöffnung 26 in einem Ausformungsbereich 36 der Außenwandung 14 bereitgestellt sein, so dass der Randbereich 34 eine ungekrümmte, ebene Anlagefläche 38 für den Außenwandung-Verbindungsbereich 32 und somit eine in dem gesamten Umfang flächige Anlage desselben bereitstellt.

Das Heizleiterelement 12 umfasst einen vorteilhafterweise mit Metallmaterial aufgebauten Mantel 40. In demjenigen Bereich, in welchem das Heizleiterelement 12 das Verbindungselement 24 und damit auch die Durchgriffsöffnung 26 in der Außenwandung 14 durchsetzt, ist der Mantel 40 mit einer Aufdickung 42 ausgebildet. Beispielsweise kann die Aufdickung 42 durch eine Hülse aus Metallmaterial bereitgestellt sein, welche mit dem Mantel 40 durch Verpressen gasdicht verbunden ist. Auf diese Art und Weise wird eine beispielsweise durch Verschweißen erzeugte materialschlüssige Verbindung zwischen der Hülse 44 und dem Mantel 40, welche aufgrund der dabei unvermeidbar eingetragenen Wärme zu einer Beschädigung des Heizleiterelements 12 führen könnte, vermieden.

Das Heizleiterelement 12 ist im Bereich der Aufdickung 42, welche sich beidseits des Verbindungselements 24 einige Millimeter oder Zentimeter erstrecken kann, durch Verschweißen materialschlüssig und somit gasdicht mit dem Verbindungselement 24 verbunden. Beispielsweise kann eine über den gesamten Umfang der Aufdickung 42 bzw. der Hülse 44 umlaufende Schweißnaht 46 erzeugt werden. Gleichermaßen kann zur Erzeugung einer stabilen, gasdichten Anbindung des Verbindungselements 24 an die Außenumfangswandung 14 eine sich über den gesamten Umfang des Verbindungselements 24 bzw. des Außenwandung-Verbindungsbereichs 32 erstreckende Schweißnaht 48 bereitgestellt werden.

Mit dem in der Fig. 1 dargestellten Aufbau der Abgasanlage 10 bzw. der Durchführungsanordnung 22 werden verschiedene Vorteile erreicht. Einerseits wird mit einem derartigen Aufbau ein direkter Kontakt des Heizleiterelements 12 mit der Außenwandung 14 vermieden. Gleichwohl erzeugt der in die Durchführungsöffnung 26 eingreifend positionierte Heizleiterelement-Verbindungsbereich 28 eine definierte Positionierung des Heizleiterelements 12 in der Durchführungsöffnung 26. Da somit die Durchführungsöffnung 26 mit ihrer Innenquerschnittsabmessung, bei kreisrunder Ausgestaltung also beispielsweise ihrem Innendurchmesser, deutlich größer gestaltet werden kann, als eine Außenquerschnittsabmessung, beispielsweise Außendurchmesser, des Heizleiterelements 12 in seinem die Durchführungsöffnung 26 durchsetzenden Längenbereich, also insbesondere im Bereich der am Mantel 40 vorgesehenen Aufdickung 42, wird es möglich, das Heizleiterelement 12 beim Zusammenbau der Abgasanlage 10 auch dann, wenn dieses eine beispielsweise zur Anpassung an die Kontur des Mischers 12 gekrümmte Erstreckung aufweist, in die Abgasführungskomponente 16 bei daran bereits angebrachtem Mischer 20 einzuführen und bezüglich des Mischers 20 geeignet zu positionieren. Die zur festen Anbindung an die Außenwandung 14 zu erzeugenden Schweißnähte 46, 48 werden dann in Bereichen erzeugt, welche zu einer thermischen Überlastung des Heizleiterelements 12 bei Durchführung der Schweißvorgänge nicht führen können.

Beispielsweise kann beim Zusammenbau der Abgasanlage 10 so vorgegangen werden, dass zunächst die abgasführende Komponente 16 mit der Durchführungsöffnung 26 in der Außenwandung 14 derselben und beispielsweise bereits an der Außenwandung 14 angebrachtem Mischer 20 bereitgestellt wird. Das Heizleiterelement 12 kann mit der am Mantel 40 desselben beispielsweise durch Aufbringen und Verpressen der Hülse 44 bereitgestellten Aufdickung 42 bereitgestellt und mit seinem im Inneren der abgasführenden Komponente 16 zu positionierenden Längenbereich von außen, also in Fig. 1 von links, durch die Durchführungsöffnung 26 hindurch in das Volumen 18 eingeführt werden. In diesem Zustand ist das Verbindungselement 26 noch nicht am Heizleiterelement 12 vorgesehen oder ist beispielsweise das Heizleiterelement 12 im Bereich der Aufdickung 42 umgebend, jedoch nicht in seiner für den endgültigen Einbau vorgesehenen Lage positioniert. Bei im Wesentlichen geeignet bezüglich der abgasführenden Komponente 16 positioniertem Heizleiterelement 12 wird dann das Verbindungselement 24 auf das Heizleiterelement 12 im Bereich der Verdickung 42 aufgeschoben bzw. wird auf der Verdickung 42 derart verschoben, dass es in der in Fig. 1 dargestellten, für den endgültigen Einbau bezüglich der Außenwandung 14 in der abgasführenden Komponente 16 derart positioniert ist, dass bei im Heizleiterelement-Verbindungsbereich 28 die Heizleiter-Aufnahmeöffnung 30 durchsetzendem Heizleiterelement 12 der Heizleiterelement-Verbindungsbereich 28 in die Durchführungsöffnung 26 eingreifend positioniert ist und der Außenwandung-Verbindungsbereich 32 am Randbereich 34 der Außenwandung 14 anliegt.

Es kann dann beispielsweise zunächst die Schweißnaht 48 erzeugt werden, um das Verbindungselement 24 fest und somit definiert bezüglich der Außenwandung 14 zu positionieren. Das Heizleiterelement 12 ist dann bezüglich des Verbindungselements 24 immer noch in Richtung der Längsachse der Heizleiterelement-Aufnahmeöffnung 30 verschiebbar bzw. um diese Achse drehbar, so dass auch eine Feinjustierung des Heizleiterelements 12 noch vorgenommen werden kann. Ist dies erfolgt, kann das Heizleiterelement 12 durch Erzeugen der Schweißnaht 46 im Bereich der Aufdickung 42 fest und gasdicht an das Verbindungselement 24 angebunden werden. Vor oder nach dieser Maßnahme kann beispielsweise der im Volumen 18 sich erstreckende Längenbereich des Heizleiterelements 12 durch ein Klemmelement fest bezüglich des Mischers 20 geklemmt werden, um einerseits im Betrieb das Entstehen von Klappergeräuschen zu vermeiden, andererseits für die Erzeugung der Schweißnaht 46 die definierte Positionierung des Heizleiterelements 12 vorgeben zu können. Diese Verklemmung kann beispielsweise auch bereits vor Erzeugung der Schweißnaht 48 bzw. vor der Maßnahme zum Positionieren des Verbindungselements 24 in seiner Einbauposition durchgeführt werden. Grundsätzlich könnte diese Maßnahme zum festen Klemmen des Heizleiterelements 12 bezüglich des Mischers 20 auch erst dann durchgeführt werden, wenn das Heizleiterelement 12 fest und gasdicht mit dem Verbindungselement 24 verbunden ist und das Verbindungselement 24 fest und gasdicht mit der Außenwandung 14 verbunden ist.

Die Fig. 1 veranschaulicht einen weiteren besonders vorteilhaften Aspekt der erfindungsgemäß aufgebauten Abgasanlage 10, welcher zum Vermeiden thermischer Verluste insbesondere im Heizbetrieb des Heizleiterelements 12 führen kann. Das Heizleiterelement 12 umfasst in dem Mantel 40 eine Heizleiteranordnung 50. Die Heizleiteranordnung 50 umfasst einen beispielsweise an der Außenseite der abgasführenden Komponente 16 elektrisch kontaktierten Anschlussleiter 52, der aus einem elektrisch leitenden Material mit vergleichsweise geringem elektrischen Widerstand, wie z. B. Kupfermaterial, aufgebaut sein kann. Bei Anlegen einer elektrischen Spannung und dadurch erzeugten Stromfluss durch die Heizleiteranordnung 50 wird im Bereich des Anschlussleiters 52 im Wesentlichen keine Wärme erzeugt werden.

An einem allgemein mit 54 bezeichneten Übergang schließt an den Anschlussleiter 52 ein Heizleiter 56 an. Dieser ist aus derartigem Material aufgebaut, dass der durch die Heizleiteranordnung 50 fließende elektrische Strom zu einer Erwärmung des Heizleiters 56 und somit im Wesentlichen zur thermischen Aktivität des Heizleiterelements 12 führt. Vorteilhafterweise ist der Übergang 54 derart positioniert, dass er im Bereich des im Volumen 18, also im Inneren der abgasführenden Komponente 16 liegenden Endes 58 der Aufdickung 42 bzw. der Hülse 44 positioniert ist. Besonders vorteilhaft ist dabei eine Ausgestaltung, bei welcher der Übergang 54 von der Aufdickung 42 nicht überdeckt ist. Somit beginnt der thermisch aktive Bereich des Heizleiterelements 12 in einem Bereich, der einerseits zum Verbindungselement 24 und damit auch zur Außenwandung 14 einen vergleichsweise großen Abstand aufweist, und der andererseits im Wesentlichen nicht von der Aufdickung 42 übergriffen ist. Thermische Verluste über den Mantel 40, die Aufdickung 42, das Verbindungselement 24 und die Außenwandung 14 können somit deutlich gemindert werden.

Die Heizleiteranordnung 50 ist im Mantel 40 durch elektrisch isolierendes Material 60, beispielsweise Magnesiumoxid oder dergleichen, umgeben und somit im Inneren des Mantels 40 bezüglich diesem elektrisch isoliert. In dem im Inneren der abgasführenden Komponente 16 liegenden Endbereich kann die Heizleiteranordnung 50 dann an den Mantel 50 leitend angebunden werden, so dass dieser den zweiten elektrischen Kontakt, insbesondere das Massepotential, bereitstellen kann. Es ist darauf hinzuweisen, dass das Heizleiterelement 12 alternativ auch mit zwei im Inneren des Mantels 40 verlaufenden und bezüglich diesem elektrisch isoliert gehaltenen Leitungsbereichen ausgebildet sein kann, die beispielsweise zueinander koaxial angeordnet sein können, so dass der Mantel 40 selbst nicht elektrisch leitend wirksam ist.

## Patentansprüche

1. Abgasanlage für eine Brennkraftmaschine, umfassend:
- eine abgasführende Komponente (16) mit einer Außenwandung (14),
- ein Heizleiterelement (12) mit einem mit Metallmaterial aufgebauten Mantel (40) und einer von dem Mantel (40) umgebenen Heizleiteranordnung (50),
- eine Durchführungsanordnung (22), umfassend eine Durchführungsöffnung (26) in der Außenwandung (14) und ein mit dem Heizleiterelement (12) einerseits und der Außenwandung (14) andererseits gasdicht verbundenes Verbindungselement (24), wobei das Verbindungselement (24) mit der Außenwandung (14) materialschlüssig verbunden ist,
wobei
die Durchführungsanordnung (22) zum gasdichten Durchführen des Heizleiterelements (12) durch die Außenwandung (14) der abgasführenden Komponente (16) ausgebildet ist, **dadurch gekennzeichnet, dass** die Durchführungsanordnung (22) in einem die Durchführungsöffnung (26) durchsetzenden Längenabschnitt des Heizleiterelements (12) eine Aufdickung (42) des Mantels (40) umfasst.

2. Abgasanlage nach Anspruch 1, **dadurch gekennzeichnet, dass** die Aufdickung (42) durch eine den Mantel (40) gasdicht umgebende Hülse (44) bereitgestellt ist.

3. Abgasanlage nach Anspruch 2, **dadurch gekennzeichnet, dass** die Hülse (44) mit dem Mantel (40) durch Verpressen gasdicht verbunden ist, oder/und dass die Hülse (44) mit Metallmaterial aufgebaut ist.

4. Abgasanlage nach einem der vorangehenden Ansprüche, **dadurch gekennzeichnet, dass** eine Innenquerschnittsabmessung, vorzugsweise Innendurchmesser, der Durchführungsöffnung (26) wenigstens das 1,5-Fache einer Außenquerschnittsabmessung, vorzugsweise Außendurchmesser, des Heizleiterelements (12) in seinem die Durchführungsöffnung (26) durchsetzenden Längenabschnitt beträgt.

5. Abgasanlage nach einem der vorangehenden Ansprüche, **dadurch gekennzeichnet, dass** das Verbindungselement (24) mit der Außenwandung (14) durch Verschweißen verbunden ist, oder/und dass das Heizleiterelement (12) mit dem Verbindungselement (24) materialschlüssig, vorzugsweise durch Verschweißen, verbunden ist.

6. Abgasanlage nach einem der vorangehenden Ansprüche, **dadurch gekennzeichnet, dass** das Verbindungselement (24) umfasst:
- einen eine Heizleiterelement-Aufnahmeöffnung (30) bereitstellenden und in die Durchführungsöffnung (26) in der Außenwandung (14) eingreifenden Heizleiterelement-Verbindungsbereich (28),
- einen vom Heizleiterelement-Verbindungsbereich (28) nach außen hervorstehenden und einen die Durchführungsöffnung (26) in der Außenwandung (14) umgebenden Randbereich (34) der Außenwandung (14) übergreifenden Außenwandung-Verbindungsbereich (32),
wobei der Heizleiterelement-Verbindungsbereich (28) mit dem Heizleiterelement (12) materialschlüssig, vorzugsweise durch Verschweißen, verbunden ist und der Außenwandung-Verbindungsbereich (32) mit der Außenwandung (14) materialschlüssig, vorzugsweise durch Verschweißen, verbunden ist.

7. Abgasanlage nach einem der vorangehenden Ansprüche, **dadurch gekennzeichnet, dass** die Heizleiteranordnung (50) in einem die Durchführungsöffnung (26) durchsetzenden Längenabschnitt des Heizleiterelements (12) einen elektrischen Anschlussleiter (52) und einen im Inneren der Abgasführungskomponente (16) an den Anschlussleiter (52) anschließenden Heizleiter (56) umfasst.

8. Abgasanlage nach Anspruch 7, **dadurch gekennzeichnet, dass** ein Übergang (54) von dem Anschlussleiter (52) zu dem Heizleiter (56) im Bereich eines im Inneren der Abgasführungskomponente (16) angeordneten Endes (58) der Aufdickung (42) liegt, vorzugsweise derart, dass der Übergang (54) nicht von der Aufdickung (42) umgeben ist.

9. Verfahren zum Aufbau einer Abgasanlage nach einem der vorangehenden Ansprüche, umfassend die Maßnahmen:
a) Bereitstellen des Abgasführungselements (16) mit der Durchführungsöffnung (26) in der Außenwandung,
b) Hindurchführen des Heizleiterelements (12) durch die Durchführungsöffnung (26) in der Außenwandung (14),
c) nach Durchführung der Maßnahme b), Anordnen des Verbindungselements (24) an dem Heizleiterelement (12) derart, dass das Verbindungselement (24) im Bereich der Durchführungsöffnung (26) an der Außenwandung (14) positioniert ist,
d) nach Durchführung der Maßnahme c), gasdichtes Verbinden des Verbindungselements (26) mit der Außenwandung (14) und dem Heizleiterelement (12),
wobei die Maßnahme a) das Bereitstellen des Heizleiterelements (12) mit der Aufdickung (42) umfasst und die Maßnahme b) das Hindurchführen des Heizleiterelements (12) durch die Durchführungsöffnung (26) in der Außenwandung (14) derart umfasst, dass das Heizleiterelement (12) mit der Aufdickung (42) durch die Durchführungsöffnung (26) sich hindurcherstreckend positioniert ist.

10. Verfahren nach Anspruch 9 in Verbindung mit Anspruch 6, **dadurch gekennzeichnet, dass** bei der Maßnahme c) das Verbindungselement (24) derart an dem Heizleiterelement (12) angeordnet wird, dass der Heizleiterelement-Verbindungsbereich (28) das Heizleiterelement (12) in der Heizleiterelement-Aufnahmeöffnung (30) aufnehmend und in die Durchführungsöffnung (26) eingreifend positioniert ist und dass der Außenwandung-Verbindungsbereich (32) den Randbereich (34) der Außenwandung (14) übergreifend an der Außenwandung (14) anliegend positioniert ist.

11. Verfahren nach einem der Ansprüche 9 oder 10, **dadurch gekennzeichnet, dass** die Maßnahme c) eine Maßnahme c1) zum gasdichten Verbinden des Verbindungselements (24) mit der Außenwandung (14) und nach der Maßnahme c1) eine Maßnahme c2) zum gasdichten Verbinden des Verbindungselements (24) mit dem Heizleiterelement (12) umfasst.

12. Verfahren nach einem der Ansprüche 9-11, **dadurch gekennzeichnet, dass** bei der Maßnahme c) das Verbindungselement (24) mit der Außenwandung (14) durch Verschweißen verbunden wird oder/und mit dem Heizleiterelement (12) durch Verschweißen verbunden wird.

13. Verfahren nach einem der Ansprüche 9-12, dass die Maßnahme a) das Bereitstellen der abgasführenden Komponente (16) mit der Durchführungsöffnung (26) derart umfasst, dass eine Innenquerschnittsabmessung, vorzugsweise Innendurchmesser, der Durchführungsöffnung (26) wenigstens das 1,5-Fache einer Außenquerschnittsabmessung, vorzugsweise Außendurchmesser, des Heizleiterelements (12) in seinem die Durchführungsöffnung durchsetzend zu positionierenden Längenabschnitt beträgt.

## Claims

1. Exhaust system for an internal combustion engine, comprising:
- an exhaust gas-carrying component (16) with an outer wall (14),
- a heat conductor element (12) with a jacket (40) made of metallic material and with a heat conductor device (50) enclosed by the jacket (40), and
- a pass-through device (22), comprising a pass-through opening (26) in the outer wall (14), and a connection element (24), which is connected in a gastight manner to the heat conductor element (12), on the one hand, and to the outer wall (14), on the other hand, wherein the connection element (24) is connected in substance to the outer wall (14),
wherein the pass-through device (22) is designed to pass the heat conductor element (12) through the outer wall (14) of the exhaust gas-carrying component (16) in a gastight manner,
**characterized in that** the pass-through device (22) comprises a thickened area (42) of the jacket (40) in a longitudinal section of the heat conductor element (12), which longitudinal section traverses the pass-through opening (26).

2. Exhaust system in accordance with claim 1, **characterized in that** the thickened area (42) is provided by a sleeve (44) enclosing the jacket (40) in a gastight manner.

3. Exhaust system in accordance with claim 2, **characterized in that** the sleeve (44) is connected in a gastight manner to the jacket (40) by compressing, or/and that the sleeve (44) is made of metallic material.

4. Exhaust system in accordance with one of the preceding claims, **characterized in that** an internal cross-sectional dimension, preferably internal diameter, of the pass-through opening (26) is at least 1.5 times an external cross-sectional dimension, preferably external diameter, of the heat conductor element (12) in its longitudinal section traversing the pass-through opening (26).

5. Exhaust system in accordance with one of the preceding claims, **characterized in that** the connection element (24) is connected by welding, to the outer wall (14), or/and that the heat conductor element (12) is connected in substance, preferably by welding, to the connection element (24).

6. Exhaust system in accordance with one of the preceding claims, **characterized in that** the connection element (24) comprises:
- a heat conductor element connection area (28) providing a heat conductor element receiving opening (30) and meshing with the pass-through opening (26) in the outer wall (14), and
- an outer wall connection area (32) protruding outwards from the heat conductor element connection area (28) and extending over an edge area (34) of the outer wall (14), which edge area encloses the pass-through opening (26) in the outer wall (14),
wherein the heat conductor element connection area (28) is connected in substance, preferably by welding, to the heat conductor element (12), and the outer wall connection area (32) is connected in substance, preferably by welding, to the outer wall (14).

7. Exhaust system in accordance with one of the preceding claims, **characterized in that** the heat conductor device (50) comprises an electrical connecting conductor (52) in a longitudinal section of the heat conductor element (12) traversing the pass-through opening (26) and a heat conductor (56) which adjoins the connecting conductor (52) in the interior of the exhaust gas-carrying component (16).

8. Exhaust system in accordance with claim 7, **characterized in that** a transition (54) from the connecting conductor (52) to the heat conductor (56) is located in the area of an end (58) of the thickened area (42), which end is arranged in the interior of the exhaust gas-carrying component (16), preferably such that the transition (54) is not enclosed by the thickened area (42).

9. Process for the assembly of an exhaust system in accordance with one of the preceding claims, comprising the steps:
a) providing the exhaust gas-carrying element (16) with the pass-through opening (26) in the outer wall,
b) passing of the heat conductor element (12) through the pass-through opening (26) in the outer wall (14),
c) after carrying out step b), arranging the connection element (24) at the heat conductor element (12) such that the connection element (24) is positioned in the area of the pass-through opening (26) at the outer wall (14), and
d) after carrying out step c), gastight connection of the connection element (26) to the outer wall (14) and to the heat conductor element (12),
wherein step a) comprises the provision of the heat conductor element (12) with the thickened area (42), and wherein step b) comprises the passing of the heat conductor element (12) through the pass-through opening (26) in the outer wall (14) such that the heat conductor element (12) with the thickened area (42) is positioned such that it extends through the pass-through opening (26).

10. Process in accordance with claim 9 in conjunction with claim 6, **characterized in that** in step c) the connection element (24) is arranged at the heat conductor element (12) such that the heat conductor element connection area (28) is positioned such that it receives the heat conductor element (12) in the heat conductor element receiving opening (30) and such that it meshes with the pass-through opening (26), and that the outer wall connection area (32) is positioned in contact with the outer wall (14) such that it extends over the edge area (34) of the outer wall (14).

11. Process in accordance with one of the claims 9 or 10, **characterized in that** step c) comprises a step c1) for the gastight connection of the connection element (24) to the outer wall (14) and after step c1) a step c2) for the gastight connection of the connection element (24) to the heat conductor element (12).

12. Process in accordance with one of the claims 9-11, **characterized in that** the connection element (24) is connected by welding to the outer wall (14) or/and is connected by welding to the heat conductor element (12) in step c).

13. Process in accordance with one of the claims 9-12, **characterized in that** step a) comprises the provision of the exhaust gas-carrying component (16) with the pass-through opening (26) such that an internal cross-sectional dimension, preferably internal diameter, of the pass-through opening (26) is at least 1.5 times an external cross-sectional dimension, preferably external diameter, of the heat conductor element (12) in its longitudinal section to be positioned such that it traverses the pass-through opening.

## Revendications

1. Système d'échappement pour un moteur à combustion interne, comprenant :
- un composant de transport de gaz d'échappement (16) avec une paroi extérieure (14),
- un élément conducteur de chaleur (12) avec une enveloppe (40) faite d'un matériau métallique et avec un dispositif conducteur de chaleur (50) entouré par l'enveloppe (40), et
- un dispositif de passage (22), comprenant une ouverture de passage (26) dans la paroi extérieure (14), et un élément de connexion (24), qui est relié de manière étanche au gaz à l'élément conducteur de chaleur (12), d'une part, et à la paroi extérieure (14), d'autre part, dans lequel l'élément de connexion (24) est relié par connexion en substance à la paroi extérieure (14),
dans lequel le dispositif de passage (22) est conçu pour faire passer l'élément conducteur de chaleur (12) à travers la paroi extérieure (14) du composant de transport de gaz d'échappement (16) de manière étanche aux gaz,
**caractérisé en ce que** le dispositif de passage (22) comprend une zone épaissie (42) de l'enveloppe (40) dans une section longitudinale de l'élément conducteur de chaleur (12), laquelle section longitudinale traverse l'ouverture de passage (26).

2. Système d'échappement selon la revendication 1, **caractérisé en ce que** la zone épaissie (42) est fournie par une gaine (44) entourant la chemise (40) de manière étanche aux gaz.

3. Système d'échappement selon la revendication 2, **caractérisé en ce que** la gaine (44) est reliée de manière étanche aux gaz à la chemise (40) par compression, ou/et **en ce que** la gaine (44) est réalisée en matériau métallique.

4. Système d'échappement selon l'une des revendications précédentes, **caractérisé en ce qu'**une dimension transversale interne, de préférence un diamètre interne, de l'ouverture de passage (26) est au moins 1,5 fois une dimension transversale externe, de préférence un diamètre externe, de l'élément conducteur de chaleur (12) dans sa section longitudinale traversant l'ouverture de passage (26).

5. Système d'échappement selon l'une des revendications précédentes, **caractérisé en ce que** l'élément de connexion (24) est relié par soudage à la paroi extérieure (14), ou/et **en ce que** l'élément conducteur de chaleur (12) est relié en substance, de préférence par soudage, à l'élément de connexion (24).

6. Système d'échappement selon l'une des revendications précédentes, **caractérisé en ce que** l'élément de connexion (24) comprend :
- une zone de connexion d'élément conducteur de chaleur (28) fournissant une ouverture de réception d'élément conducteur de chaleur (30) et s'engrenant avec l'ouverture de passage (26) de la paroi extérieure (14), et
- une zone de connexion de paroi extérieure (32) faisant saillie vers l'extérieur depuis la zone de connexion d'élément conducteur de chaleur (28) et s'étendant sur une zone de bord (34) de la paroi extérieure (14), laquelle zone de bord entoure l'ouverture de passage (26) dans la paroi extérieure (14),
dans lequel la zone de connexion d'élément conducteur de chaleur (28) est reliée en substance, de préférence par soudage, à l'élément conducteur de chaleur (12), et la zone de connexion de la paroi extérieure (32) est reliée en substance, de préférence par soudage, à la paroi extérieure (14).

7. Système d'échappement selon l'une des revendications précédentes, **caractérisé en ce que** le dispositif conducteur de chaleur (50) comprend un conducteur de raccordement électrique (52) dans une section longitudinale de l'élément conducteur de chaleur (12) traversant l'ouverture de passage (26) et un conducteur de chaleur (56) qui se raccorde au conducteur de raccordement (52) à l'intérieur du composant de transport de gaz d'échappement (16).

8. Système d'échappement selon la revendication 7, **caractérisé en ce qu'**une transition (54) du conducteur de raccordement (52) au conducteur thermique (56) est située dans la zone d'une extrémité (58) de la zone épaissie (42), laquelle extrémité est disposée à l'intérieur du composant de transport de gaz d'échappement (16), de préférence de telle sorte que la transition (54) n'est pas entourée par la zone épaissie (42).

9. Procédé d'assemblage d'un système d'échappement selon l'une des revendications précédentes, comprenant les étapes :
a) mettre à disposition l'élément de transport de gaz d'échappement (16) avec l'ouverture de passage (26) dans la paroi extérieure,
b) faire passer l'élément conducteur de chaleur (12) à travers l'ouverture de passage (26) dans la paroi extérieure (14),
c) après l'exécution de l'étape b), arranger l'élément de connexion (24) sur l'élément conducteur de chaleur (12) de telle sorte que l'élément de connexion (24) soit positionné dans la zone de l'ouverture de passage (26) sur la paroi extérieure (14), et
d) après l'exécution de l'étape c), connexion étanche aux gaz de l'élément de connexion (26) à la paroi extérieure (14) et à l'élément conducteur de chaleur (12),
dans lequel l'étape a) comprend la fourniture de l'élément conducteur de chaleur (12) avec la zone épaissie (42), et l'étape b) comprend le passage de l'élément conducteur de chaleur (12) à travers l'ouverture de passage (26) dans la paroi extérieure (14) de sorte que l'élément conducteur de chaleur (12) avec la zone épaissie (42) est positionné de sorte qu'il s'étende à travers l'ouverture de passage (26).

10. Procédé selon la revendication 9 en liaison avec la revendication 6, **caractérisé en ce que**, à l'étape c), l'élément de connexion (24) est disposé sur l'élément conducteur de chaleur (12) de telle sorte que la zone de connexion d'élément conducteur de chaleur (28) est positionnée de manière à recevoir l'élément conducteur de chaleur (12) dans l'ouverture de réception de l'élément conducteur de chaleur (30) et à s'engager dans l'ouverture de passage (26), et **en ce que** la zone de connexion de la paroi extérieure (32) est positionnée en contact avec la paroi extérieure (14) de manière à s'étendre sur la zone de bord (34) de la paroi extérieure (14).

11. Procédé selon l'une des revendications 9 ou 10, **caractérisé en ce que** l'étape c) comprend une étape c1) de connexion étanche au gaz de l'élément de connexion (24) à la paroi extérieure (14) et après l'étape c1) une étape c2) de connexion étanche au gaz de l'élément de connexion (24) à l'élément conducteur de chaleur (12).

12. Procédé selon l'une des revendications 9 à 11, **caractérisé en ce que**, à l'étape c), l'élément de connexion (24) est relié par soudage à la paroi extérieure (14) ou/et est relié par soudage à l'élément conducteur de chaleur (12).

13. Procédé selon l'une des revendications 9 à 12, **caractérisé en ce que** l'étape a) comprend la fourniture du composant de transport de gaz d'échappement (16) avec l'ouverture de passage (26) de sorte qu'une dimension de section transversale interne, de préférence un diamètre interne, de l'ouverture de passage (26) est au moins 1,5 fois une dimension de section transversale externe, de préférence un diamètre externe, de l'élément conducteur de chaleur (12) dans sa section longitudinale à positionner de sorte qu'il traverse l'ouverture de passage.
